# EUROPEAN PATENT SPECIFICATION

(11) **EP 3 769 994 B1**
(45) Date of publication and mention of the grant of the patent: **01.06.2022**
(21) Application number: 20184238.2
(22) Date of filing: 06.07.2020
(51) Int. Cl.: B60K 15/04, B01D 46/00, B01D 53/00, B65D 51/16, B60K 15/035, F01M 11/04, B01D 46/12, B01D 53/04

(54) **FUEL FILLER CAP CANISTER**
TANKDECKELKANISTER
RÉSERVOIR DE BOUCHON DE REMPLISSAGE DE CARBURANT

(30) Priority: 16.07.2019 JP 2019131370
(43) Date of publication of application: 27.01.2021
(73) Proprietor: Honda Motor Co., Ltd., Tokyo 107-8556 (JP)
(72) Inventor: MATSUURA, Kazuya, Shizuoka, 431-3314 (JP); TASHIRO, Takahiro, Shizuoka, 431-3314 (JP); TOMIMOTO, Takanari, Shizuoka, 431-3314 (JP); MORINAGA, Ryota, Saitama, 351-0193 (JP); HONMA, Katsuki, Saitama, 351-0193 (JP); URANO, Shohei, Saitama, 351-0193 (JP)
(74) Representative: Viering, Jentschura & Partner mbB Patent- und Rechtsanwälte

(56) References cited:
- JP-A- 2013 050 047
- US-A1- 2011 290 118
- US-A1- 2013 341 331

## Description

### BACKGROUND OF THE INVENTION

### Field of the Invention

The present invention relates to a fuel filler cap to be removably attached to a fuel filler port of a fuel tank, and in particular to a fuel filler cap with improved adsorption efficiency of activated carbon used to adsorb fuel vapor generated in the fuel tank to prevent volatile organic compounds (VOC) contained in the fuel vapor from being discharged.

### Description of the Related Art

It has been known that internal pressure of a fuel tank may fluctuate due to effects such as environmental temperature variation. This is problematic because an increase in the internal pressure of the fuel tank may damage the fuel tank and a decrease in the internal pressure may adversely affect fuel supply to an internal combustion engine. To avoid such a problem caused by the fluctuation of the internal pressure, the fuel filler cap is provided with a vapor vent hole to keep the internal pressure of the fuel tank between reference values such that the fuel vapor is discharged from or outside air is introduced into the vapor vent hole to keep the pressure in the fuel tank within a predetermined range.

However, fuel vapor contains VOC, which is unfavorable to the environment. To prevent the VOC from being discharged along with the fuel vapor from the vapor vent hole, some known fuel filler caps include activated carbon disposed within the fuel filler cap to allow the activated carbon to adsorb the fuel vapor to suppress discharge of the VOC.

Such fuel filler caps in various forms have been known. For example, a fuel filler cap described in U.S. Patent No. 9737843 includes a casing, a main chamber disposed in the casing, a vapor vent channel disposed in the casing and being in communication with the main chamber, and a plurality of annular partition walls disposed in the main chamber and arranged to divide the main chamber into a plurality of troughs, in which each of the annular partition walls has a cut, the troughs can communicate with each other through the cut, the troughs are filled with activated carbon, the vapor vent channel is made up of the cut and the trough, and the activated carbon adsorbs fuel vapor and absorbs VOC in the fuel vapor when the fuel vapor passes through the vapor vent channel.

With such a configuration, adsorption efficiency for noxious VOC in fuel vapor can be increased without an increase in size of the fuel filler cap and a container for the activated carbon.

Moreover, US 2013/341331 A1 discloses a fuel cap configured to be coupled with the opening of a fuel tank defining an interior for containing a volume of fuel, wherein an inlet opening is configured to establish fluid communication with the fuel tank interior, an exit is in communication with a surrounding atmosphere, exterior to the fuel cap, a flow path is defined from the inlet opening to the exit, adsorption media substantially fills the flow path and is configured to reduce the emission of VOC vapors through the exit to the surrounding atmosphere, and the flow path extends spirally about an axis of the fuel cap from the inlet opening to the exit.

Moreover, JP 2013-050047 A discloses a cap for a fuel tank having an inner cap and an outer cap, the inner cap having a small diameter cylinder part, a stepped part, and a large diameter cylinder part, wherein in the small diameter cylinder part a gas-liquid separator is mounted, a canister is formed by air permeable partition plates in the large diameter cylinder part, and activated charcoal is filled inside, and wherein, on a lower side of the air permeable partition plate, a communication space is formed which communicates with the inside of the gas-liquid separator.

Moreover, US 2011/290118 A1 discloses a vaporized fuel treatment apparatus, wherein a partition wall member is housed in an inner cap, and a gas-liquid separation chamber and a fuel adsorption chamber are defined on either side of the partition wall member, wherein a partition plate is provided on an open end of the inner cap, wherein wall portions are formed respectively on the partition wall member and the partition plate, and a conduction passage is defined in the fuel adsorption chamber by these wall portions, and wherein a through hole is provided in a central portion of the partition wall member.

### SUMMARY OF THE INVENTION

However, a problem with the configuration of the fuel filler cap described in U.S. Patent No. 9737843 is that since the vapor vent channel is formed of concentrically arranged annular partition walls with cuts and the vapor vent channel branches across the cut as a border, which causes the fuel vapor to flow unevenly through the branched vapor vent channel, it is difficult for the activated carbon in the vapor vent channel to uniformly adsorb the fuel vapor and thus it is difficult to improve adsorption efficiency for the fuel vapor.

An object of the present invention, which has been made in view of the above problem, is to provide a fuel filler cap canister including activated carbon used to adsorb fuel in a fuel tank for preventing the fuel from being discharged, with improved adsorption efficiency for the activated carbon.

A fuel filler cap canister according to the present invention for use with a fuel filler cap to be removably attached to a fuel filler port of a fuel tank includes: a base part provided with an attachment section to be attached to the fuel filler cap and a communicating hole that is in communication with the fuel tank, the communicating hole being formed in the base part in either one of substantially a central portion or a vicinity of an outer edge portion; and a case member to be assembled to the base part and provided with a volumetric space inside of the case member, wherein the volumetric space is provided with a spiral rib formed therein, the spiral rib extending from either one of an opposing face of the case member facing the base part or an opposing face of the base part facing the case member toward either one of the base part or the case member, the spiral rib forms an adsorption path having a first end that is in communication with the communicating hole and a second end that is in communication with an atmosphere communicating hole formed in either one of a vicinity of a peripheral edge or substantially a central portion of the opposing face of the case member facing the base part, and the adsorption path is filled with an adsorbing device.

Moreover, according to the fuel filler cap canister of the present invention, the spiral rib is arranged with a predetermined gap between the spiral rib and either one of the base part or the case member, a filter member is provided in at least a part of the gap, and a leading edge of the spiral rib is pressed against the filter member.

Preferably, in the fuel filler cap canister according to the present invention, the spiral rib is arranged with a predetermined gap between the spiral rib and either one of the base part or the case member, and the filter member is provided entirely along the gap.

Preferably, in the fuel filler cap canister according to the present invention, the filter member is provided in a predetermined gap between the spiral rib and either one of the base part or the case member and on an entire surface of the adsorption path on a side of the base part or on a side of the case member.

Preferably, in the fuel filler cap canister according to the present invention, a spiral groove corresponding to the spiral rib is formed in the filter member, and the spiral rib is inserted into the spiral groove.

Preferably, in the fuel filler cap canister according to the present invention, a width dimension of a leading edge of the spiral rib is larger than a groove width of the spiral groove.

Preferably, in the fuel filler cap canister according to the present invention, the fuel filler cap canister further includes a separator member substantially in the central portion of the base part, the separator member having a holding rib formed thereon extending along an extending direction of the spiral rib.

The summary of the invention described above is not an exhaustive list of features essential to the present invention. Subcombinations of the features may also be encompassed by the invention.

In the fuel filler cap canister according to the present invention, the adsorption path used to adsorb the fuel vapor is formed of the spiral rib. Accordingly, the activated carbon in the adsorption path can adsorb the fuel vapor uniformly and it is possible to improve the adsorption efficiency of the activated carbon. Furthermore, the improvement of the adsorption efficiency of the activated carbon can lead to a reduction in an amount of filled activated carbon, and thus a reduction in size of the fuel filler cap.

### BRIEF DESCRIPTION OF THE DRAWINGS

FIG. 1 is a perspective view of a fuel filler cap canister according to an embodiment of the present invention;
FIG. 2 is an exploded view of the fuel filler cap canister according to the embodiment of the present invention;
FIG. 3 illustrates an internal structure of a case member of the fuel filler cap canister according to the embodiment of the present invention;
FIG. 4 is a sectional view cut at IV-IV in FIG. 1;
FIG. 5 is a sectional perspective view illustrating a flow of the fuel vapor in the fuel filler cap canister according to the embodiment of the present invention;
FIG. 6 is a sectional view illustrating a variation of the fuel filler cap canister according to an embodiment of the present invention.

### DETAILED DESCRIPTION OF THE PREFERRED EMBODIMENTS

Preferable embodiments of the present invention will now be described with reference to the drawings. The embodiments described below are not intended to limit the invention defined by the claims, nor all combinations of features described in the embodiments are necessarily essential to inventive solutions.

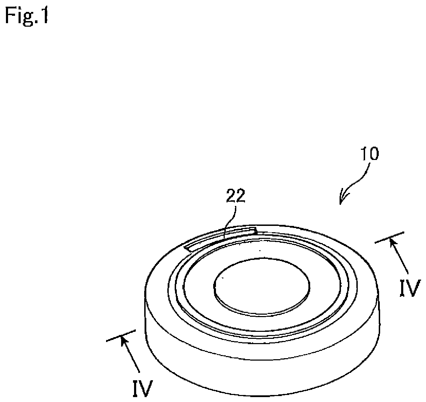

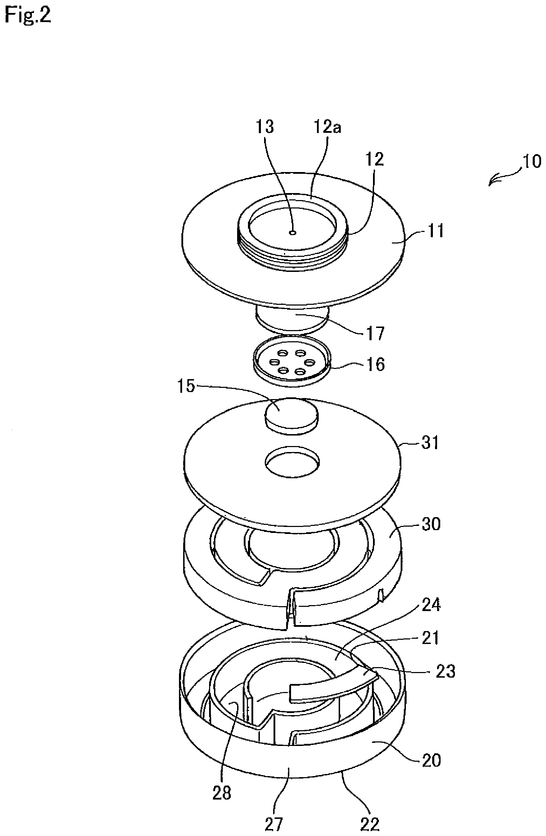

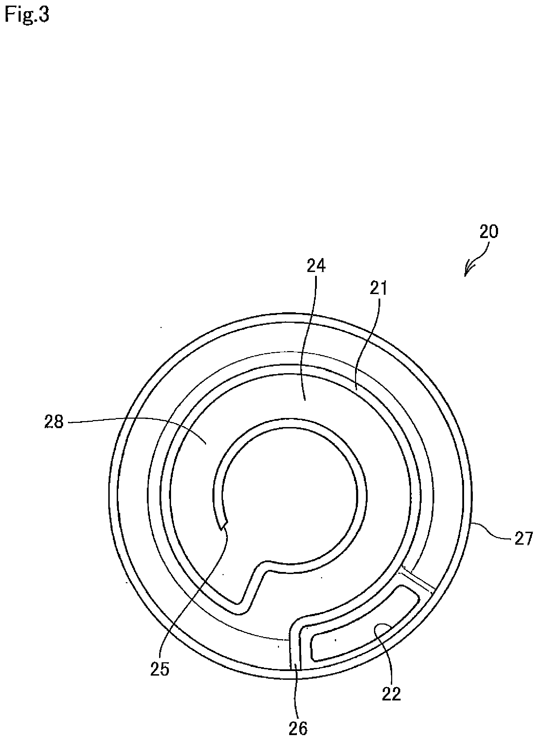

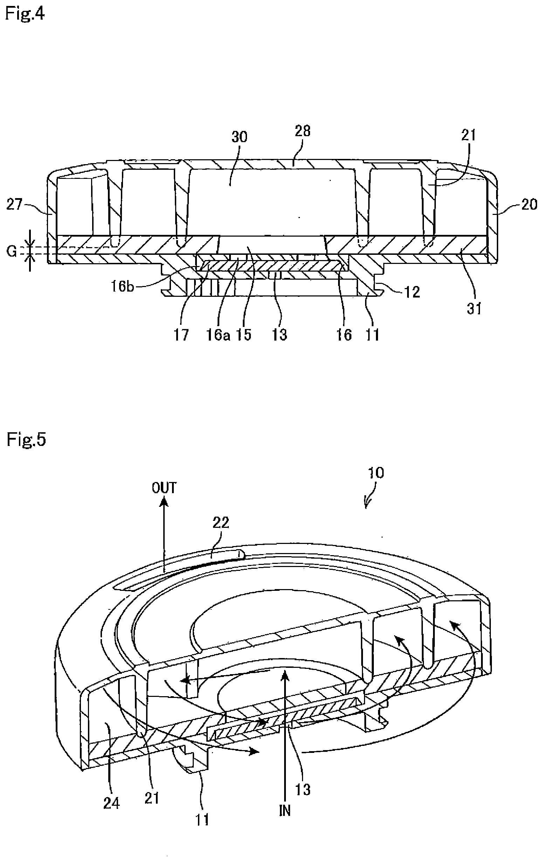

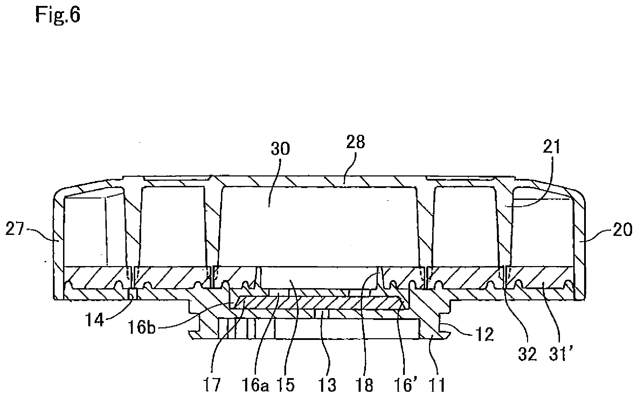

FIG. 1 is a perspective view of a fuel filler cap canister according to the present invention, FIG. 2 is an exploded view of the fuel filler cap canister according to an embodiment of the present invention, FIG. 3 illustrates an internal structure of a case member of the fuel filler cap canister according to the embodiment of the present invention, FIG. 4 is a sectional view cut at IV-IV in FIG. 1, FIG. 5 is a sectional perspective view illustrating a flow of the fuel vapor in the fuel filler cap canister according to the embodiment of the present invention, and FIG. 6 is a sectional view illustrating a variation of the fuel filler cap canister according to an embodiment of the present invention.

As illustrated in FIG. 1, a fuel filler cap canister 10 according to an embodiment is a member to be housed in a fuel filler cap that is to be removably attached to a fuel filler port of a fuel tank (not illustrated) and includes an outer plate and an outer cover (not illustrated). Various known structures may be used for the fuel filler cap, and therefore details thereof will not be described. The fuel filler cap canister 10 includes an atmosphere communicating hole 22 that is in communication with an inside of the fuel tank.

As illustrated in FIG. 2, the fuel filler cap canister 10 according to the embodiment is formed of the following components that are stacked in an axial direction: a base part 11, a fourth filter 17, a separator member 16, a third filter 15, a second filter 31, and a case member 20 in which an adsorption path 24 is formed, which will be described later. The adsorption path 24 is filled with an adsorbing device 30 composed of activated carbon or the like. The base part 11 and the case member 20 can be joined in various known ways of joining, although they may preferably be joined together by ultrasonic welding, for example.

The base part 11 is a disk-shaped member and a cylindrical protrusion 12a is formed in the central portion of the base part 11. An attachment section 12 to be attached to the outer plate of the fuel filler cap is formed on a periphery of the protrusion 12a. A communicating hole 13 that puts the adsorption path 24 into communication with the inside of the fuel tank is formed substantially in a center portion of the base part 11.

The case member 20 is a bottomed cylindrical member in which a volumetric space of a predetermined volume is formed, and includes a cap face 28 serving as an opposing face to the base part 11 and an outer wall 27 standing in such a way as to surround an outer edge of the cap face 28. A spiral rib 21 extending from the cap face 28 toward the base part 11 is formed in the volumetric space. The volumetric space is partitioned by the spiral rib 21 into the spiral adsorption path 24.

The adsorbing device 30 in the adsorption path 24 is held in the volumetric space by a first filter 23 attached to the atmosphere communicating hole 22, a second filter 31, a third filter 15 disposed in a center portion of the second filter 31, and a fourth filter 17 disposed between the separator member 16 and the base part 11 to prevent leakage to an outside of the fuel filler cap canister 10.

The first filter 23, the third filter 15, and the fourth filter 17 are made of a material having an air permeability, preferably such as nonwoven fabric, for example. The second filter 31 comes into contact with the spiral rib 21 to seal the adsorption path 24, as described later. Accordingly, the second filter 31 is preferably made of a material having a high sealability, preferably such as a foamed material and a rubber sheet, for example.

As illustrated in FIG. 3, on a first end 25, the spiral rib 21 curves in such a way as to surround a center portion of the case member 20 including an opposing face to the communicating hole 13 substantially in one turn and is formed in a spiral extending continuously toward a second end 26. The second end 26 is in contact with the outer wall 27 and surrounds an end of the atmosphere communicating hole 22 in an extending direction of the adsorption path 24.

In this way, by forming the spiral rib 21, at an first end, the adsorption path 24 defined by the spiral rib 21 is in communication with the communicating hole 13 formed in the central portion of the base part 11, that is, defines the center portion of the case member 20 including the opposing face to the communicating hole 13, and at a second end, is in communication with the atmosphere communicating hole 22, that is, defines the end of the atmosphere communicating hole 22 in the extending direction of the adsorption path 24. Specifically, the adsorption path 24 is defined by the spiral rib 21 and the outer wall 27 as illustrated in FIG. 3, forming a spiral path turning in two or more circles from the center portion of the case member 20. In this way, by forming the adsorption path 24 as a spiral path extending continuously, on a side of the first end, the adsorption path 24 is in communication with the communicating hole 13 located in the central portion of the case member 20, and on a side of the second end, is in communication with the atmosphere communicating hole 22 formed in a vicinity of a peripheral edge of the case member 20. Accordingly, the adsorbing device 30 in the adsorption path 24 that connects the communicating hole 13 and the atmosphere communicating hole 22 in the volumetric space of the case member 20 can uniformly adsorb the fuel vapor.

As illustrated in FIG. 4, the spiral rib 21 is arranged with a predetermined gap G between the spiral rib 21 and the base part 11, and the second filter 31 serving as a filter member is provided in at least a part of the gap G. The second filter 31 is pressed and elastically deformed by a leading edge of the spiral rib 21. In this way, since the gap G is provided between the spiral rib 21 and the base part 11 and the second filter 31 provided in at least a part of the gap G is pressed by the leading edge of the spiral rib 21, the second filter 31 can be aligned.

It is to be noted that the second filter 31 may be interposed entirely in the predetermined gap G formed between the spiral rib 21 and the base part 11. In this case, since the second filter 31 is provided entirely along the gap G, the fuel vapor generated in the fuel tank can pass through the adsorption path 24 defined by the spiral rib 21 without shortcutting. Accordingly, the adsorption efficiency of the adsorbing device 30 in the adsorption path 24 can be improved.

In the predetermined gap G formed between the spiral rib 21 and the base part 11 and on an entire surface on a side of the base part 11 of the adsorption path 24, the second filter 31 and the third filter 15 incorporated into a center portion of the second filter 31 are provided. In this way, the second filter 31 having a sealability is disposed on the entire surface on the side of the base part 11 of the adsorption path 24 and the third filter 15 having an air permeability is disposed in an area in communication with the communicating hole 13. Accordingly, when the fuel filler cap is vibrated, the adsorbing device 30 can be prevented from hitting against the base part 11 and coming to pieces.

The separator member 16 includes a plurality of passing holes 16a formed therein. The fourth filter 17 is disposed on a side of the base part 11 of the separator member 16 and the third filter 15 is disposed on a side of the adsorption path 24. The separator member 16 holds the fourth filter 17 provided on the side of the base part 11 by a peripheral wall 16b formed on an outer edge portion. The passing holes 16a and the communicating hole 13 are arranged such that they do not overlap in a vertical direction, so that the passing holes 16a and the communicating hole 13 form a so-called labyrinth structure. With the labyrinth structure, even when liquid fuel in the fuel tank flows from the communicating hole 13 into the fuel filler cap canister 10 for any reason, the fuel does not directly permeate various filters in the fuel filler cap canister 10.

As illustrated in FIG. 5 when the fuel filler cap canister 10 according to the embodiment thus configured discharges the fuel vapor generated in the fuel tank from the communicating hole 13, the fuel vapor passes through the adsorption path 24 in a swirling motion and is adsorbed by the adsorbing device 30 in the adsorption path 24. Accordingly, the adsorbing device 30 is effectively utilized in a uniform manner without shortcutting to a side of atmosphere, so that the adsorption efficiency of the adsorbing device can be improved. The improvement of the adsorption efficiency of the adsorbing device 30 can lead to a reduction in an amount of use of the activated carbon constituting the adsorbing device 30 or the like.

The fuel filler cap canister 10 according to the embodiment has been described as to a case in which the disk-shaped second filter 31 is used. However, as illustrated in FIG. 6, a second filter 31' may have a spiral groove 32 at a position corresponding to the spiral rib 21. In this way, by forming the spiral groove 32 at the position corresponding to the spiral rib 21, the leading edge of the spiral rib 21 may be inserted into the spiral groove 32. Since the spiral groove 32 is formed in the second filter 31 and the leading edge of the spiral rib 21 is inserted into the spiral groove 32, the second filter 31' can be aligned more reliably in a radial direction.

A width dimension of the leading edge of the spiral rib 21 may be larger than a groove width of the spiral groove 32 of the second filter 31'. Since the width dimension of the leading edge of the spiral rib 21 is larger than the groove width of the spiral groove 32 of the second filter 31', the spiral rib 21 can be elastically supported by the spiral groove 32, and the second filter 31' can be held such that the second filter 31' is pressed by the spiral rib 21 in the vertical direction. Accordingly, the second filter 31' can reliably be aligned. It is to be noted that an inspection hole 14 may be formed at the position corresponding the leading edge of the spiral rib 21 on a side of an outer edge of the base part 11 as illustrated in FIG. 6.

In a separator member 16', a holding rib 18 may be formed toward the case member 20 along the extending direction of the spiral rib 21. By forming the holding rib 18, the second filter 31' can be held along with the spiral rib 21 in the radial direction, and the third filter 15 provided inward can also be held in the radial direction.

The above-mentioned fuel filler cap canister 10 according to the embodiment has been described as to a case in which the spiral rib 21 is formed like concentric circles and the circles are continuously formed, each of which has a cutaway and is substantially in one turn. However, the shape of the spiral rib 21 is not limited thereto and may for example be a smooth spiral from the first end to the second end. The description has been made as to a case in which the first to fourth filters are used to hold the adsorbing device 30 in the adsorption path 24, the provision of all the first to fourth filters is not essential but the filters can be selected as appropriate. Any one of filters may be integrated with another or may be divided into a predetermined number of filters. The description has been made as to a case in which the spiral rib 21 is formed extending from the case member 20 to the base part 11. However, the spiral rib 21 may be formed extending from the base part 11 to the case member 20. Further, the description has been made as to a case in which the communicating hole 13 and the atmosphere communicating hole 22 are formed substantially in the central portion of the fuel filler cap canister 10 and on the outer edge portion of the case member 20, respectively. However, the communicating hole 13 and the atmosphere communicating hole 22 may be formed on the outer edge portion of the base part 11 and substantially in the central portion of the case member 20, respectively. It is obvious from the claims that such variations and alterations fall within the technical scope of the present invention.

The invention may be embodied in other specific forms without departing from the scope of the invention as defined by the claims. The present embodiments are therefore to be considered in all respects as illustrative and not restrictive, the scope of the invention being indicated by the appended claims rather than by the foregoing description and all changes which come within the meaning and range of equivalency of the claims are therefore intended to be embraced therein.

### [Reference Signs List]

10: fuel filler cap canister, 11: base part, 12: attachment section, 13: communicating hole, 14: inspection hole, 15: third filter, 16: separator member, 17: fourth filter, 18: holding rib, 20: case member, 21: spiral rib, 22: atmosphere communicating hole, 23: first filter, 24: adsorption path, 25: first end, 26: second end, 27: outer wall, 30: adsorbing device, 31: second filter (filter member), 32: spiral groove

## Claims

1. A fuel filler cap canister (10) for use with a fuel filler cap to be removably attached to a fuel filler port of a fuel tank, the fuel filler cap canister (10) comprising:
a base part (11) provided with an attachment section (12) to be attached to the fuel filler cap and a communicating hole (13) that is in communication with the fuel tank, the communicating hole (13) being formed in the base part (11) in either one of substantially a central portion or a vicinity of an outer edge portion; and
a case member (20) to be assembled to the base part (11) and provided with a volumetric space inside of the case member (20),
wherein the volumetric space is provided with a spiral rib (21) formed therein, the spiral rib (21) extending from either one of an opposing face of the case member (20) facing the base part (11) or an opposing face of the base part (11) facing the case member (20) toward either one of the base part (11) or the case member (20),
the spiral rib (21) forms an adsorption path (24) having a first end (25) that is in communication with the communicating hole (13) and a second end (26) that is in communication with an atmosphere communicating hole (22) formed in either one of a vicinity of a peripheral edge or substantially a central portion of the opposing face of the case member (20) facing the base part (11), and
the adsorption path (24) is filled with an adsorbing device (30),
**characterized in that**
the spiral rib (21) is arranged with a predetermined gap (G) between the spiral rib (21) and either one of the base part (11) or the case member (20),
a filter member (31) is provided in at least a part of the gap (G), and
a leading edge of the spiral rib (21) is pressed against the filter member (31).

2. The fuel filler cap canister (10) according to claim 1, wherein the spiral rib (21) is arranged with a predetermined gap (G) between the spiral rib (21) and either one of the base part (11) or the case member (20), and the filter member (31) is provided entirely along the gap (G).

3. The fuel filler cap canister (10) according to claim 1 or 2, wherein the filter member (31) is provided in a predetermined gap (G) between the spiral rib (21) and either one of the base part (11) or the case member (20) and on an entire surface of the adsorption path (24) on a side of the base part (11) or on a side of the case member (20).

4. The fuel filler cap canister (10) according to any one of claims 1 to 3, wherein a spiral groove (32) corresponding to the spiral rib (21) is formed in the filter member (31), and the spiral rib (21) is inserted into the spiral groove (32) .

5. The fuel filler cap canister (10) according to claim 4, wherein a width dimension of a leading edge of the spiral rib (21) is larger than a groove width of the spiral groove (32).

6. The fuel filler cap canister (10) according to any one of claims 1 to 5, further comprising a separator member (16) substantially in the central portion of the base part (11), the separator member (16) having a holding rib (18) formed thereon extending along an extending direction of the spiral rib (21).

## Patentansprüche

1. Kraftstofftankdeckelbehälter (10) zur Verwendung mit einem Kraftstofftankdeckel, welcher lösbar an einer Kraftstoffeinfüllöffnung eines Kraftstofftanks anzubringen ist, wobei der Kraftstofftankdeckelbehälter (10) aufweist:
ein Basisteil (11), welches mit einem Anbringungsabschnitt (12), der an dem Kraftstofftankdeckel anzubringen ist, und ein Verbindungsloch (13), das in Verbindung mit dem Kraftstofftank steht, versehen ist, wobei das Verbindungsloch (13) in dem Basisteil (11) in entweder einem im Wesentlichen zentralen Abschnitt oder der Nähe eines äußeren Randabschnitts ausgebildet ist, und
ein Gehäuseelement (20), welches mit dem Basisteil (11) zusammengebaut wird und mit einem Volumenraum innerhalb des Gehäuseelements (20) versehen ist,
wobei der Volumenraum mit einer darin ausgebildeten Spiralrippe (21) versehen ist, wobei sich die Spiralrippe (21) von entweder einer dem Basisteil (11) zugewandten Gegenfläche des Gehäuseelements (20) oder einer dem Gehäuseelement (20) zugewandten Gegenfläche des Basisteils (11) aus in Richtung zu entweder dem Basisteil (11) oder dem Gehäuseelement (20) hin erstreckt,
die Spiralrippe (21) einen Adsorptionspfad (24) bildet, welcher ein erstes Ende (25), das mit dem Verbindungsloch (13) in Verbindung steht, und ein zweites Ende (26) aufweist, das in Verbindung steht mit einem Atmosphärenverbindungsloch (22), welches in entweder der Nähe eines Umfangsrandes oder einem im Wesentlichen zentralen Abschnitt der dem Basisteil (11) zugewandten Gegenfläche des Gehäuseelements (20) ausgebildet ist,
der Adsorptionspfad (24) mit einer Adsorptionsvorrichtung (30) gefüllt ist,
**dadurch gekennzeichnet, dass**
die Spiralrippe (21) mit einem vorbestimmten Spalt (G) zwischen der Spiralrippe (21) und entweder dem Basisteil (11) oder dem Gehäuseelement (20) angeordnet ist,
ein Filterelement (31) in mindestens einem Teil des Spalts (G) vorgesehen ist, und
eine Vorderkante der Spiralrippe (21) gegen das Filterelement (31) gepresst ist.

2. Der Kraftstofftankdeckelbehälter (10) gemäß Anspruch 1, wobei die Spiralrippe (21) mit einem vorbestimmten Spalt (G) zwischen der Spiralrippe (21) und entweder dem Basisteil (11) oder dem Gehäuseelement (20) angeordnet ist, und das Filterelement vollständig entlang des Spalts (G) vorgesehen ist.

3. Kraftstofftankdeckelbehälter (10) gemäß Anspruch 1 oder 2, wobei das Filterelement (31) in einem vorbestimmten Spalt (G) zwischen der Spiralrippe (21) und entweder dem Basisteil (11) oder dem Gehäuseelement (20) und auf einer gesamten Fläche des Adsorptionspfads (24) auf einer Seite des Basisteils (11) oder auf einer Seite des Gehäuseelements (20) vorgesehen ist.

4. Kraftstofftankdeckelbehälter (10) gemäß einem der Ansprüche 1 bis 3, wobei in dem Filterelement (31) eine mit der Spiralrippe (21) korrespondierende Spiralnut (32) ausgebildet ist und die Spiralrippe (21) in die Spiralnut (32) eingesetzt ist.

5. Kraftstofftankdeckelbehälter (10) gemäß Anspruch 4, wobei eine Breitenabmessung einer Vorderkante der Spiralrippe (21) größer ist als eine Nutbreite der Spiralnut (32).

6. Kraftstofftankdeckelbehälter (10) gemäß einem der Ansprüche 1 bis 5, ferner aufweisend ein Trennelement (16), welches sich im Wesentlichen in dem zentralen Abschnitt des Basisteils (11) befindet, wobei das Trennelement (16) eine daran ausgebildete Halterippe (18) aufweist, welche sich entlang einer Erstreckungsrichtung der Spiralrippe (21) erstreckt.

## Revendications

1. Boîte de bouchon de réservoir de carburant (10) destinée à être utilisée avec un bouchon de réservoir de carburant à être fixé de manière amovible à un orifice de remplissage de carburant d'un réservoir de carburant, la boîte de bouchon de réservoir de carburant (10) comprenant :
une partie de base (11) pourvue d'une section de fixation (12) destinée à être fixée au bouchon de réservoir de carburant et un trou de communication (13) qui est en communication avec le réservoir de carburant, le trou de communication (13) étant formé dans la partie de base (11) soit dans une partie sensiblement centrale, soit à proximité d'une partie de bord extérieur ; et
un élément de boîtier (20) destiné à être assemblé à la partie de base (11) et pourvu d'un espace volumétrique à l'intérieur de l'élément de boîtier (20),
où l'espace volumétrique est pourvu d'une nervure en spirale (21) formée dans celui-ci, la nervure en spirale (21) s'étendant soit d'une face opposée de l'élément de boîtier (20) faisant face à la partie de base (11), soit d'une face opposée de la partie de base (11) faisant face à l'élément de boîtier (20) vers l'une ou l'autre de la partie de base (11) ou de l'élément de boîtier (20),
la nervure en spirale (21) forme un chemin d'adsorption (24) ayant une première extrémité (25) qui est en communication avec le trou de communication (13) et une deuxième extrémité (26) qui est en communication avec un trou de communication d'atmosphère (22) formé soit au voisinage d'un bord périphérique, soit dans une partie sensiblement centrale de la face opposée de l'élément de boîtier (20) faisant face à la partie de base (11), et
le chemin d'adsorption (24) est rempli d'un dispositif d'adsorption (30),
**caractérisée en ce que**
la nervure en spirale (21) est agencée avec un espace prédéterminé (G) entre la nervure en spirale (21) et l'une ou l'autre de la partie de base (11) ou de l'élément de boîtier (20),
un élément de filtre (31) est prévu dans au moins une partie de l'espace (G), et
un bord avant de la nervure en spirale (21) est pressé contre l'élément de filtre (31).

2. Boîte de bouchon de réservoir de carburant (10) selon la revendication 1, dans laquelle la nervure en spirale (21) est agencée avec un espace prédéterminé (G) entre la nervure en spirale (21) et l'une ou l'autre de la partie de base (11) ou de l'élément de boîtier (20), et l'élément de filtre (31) est prévu entièrement le long de l'espace (G).

3. Boîte de bouchon de réservoir de carburant (10) selon la revendication 1 ou 2, dans laquelle l'élément de filtre (31) est prévu dans un espace prédéterminé (G) entre la nervure en spirale (21) et l'une ou l'autre de la partie de base (11) ou de l'élément de boîtier (20) et sur une surface entière du chemin d'adsorption (24) sur un côté de la partie de base (11) ou sur un côté de l'élément de boîtier (20).

4. Boîte de bouchon de réservoir de carburant (10) selon l'une quelconque des revendications 1 à 3, dans laquelle une rainure en spirale (32) correspondant à la nervure en spirale (21) est formée dans l'élément de filtre (31), et la nervure en spirale (21) est insérée dans la rainure en spirale.

5. Boîte de bouchon de réservoir de carburant (10) selon la revendication 4, dans laquelle une dimension de largeur d'un bord avant de la nervure en spirale (21) est plus grande qu'une largeur de rainure de la rainure en spirale (32).

6. Boîte de bouchon de réservoir de carburant (10) selon l'une quelconque des revendications 1 à 5, comprenant en outre un élément séparateur (16) sensiblement dans la partie centrale de la partie de base (11), l'élément séparateur (16) ayant une nervure de maintien (18) formée sur celui-ci s'étendant le long d'une direction d'extension de la nervure en spirale (21).
